# FASCICULE DE BREVET EUROPEEN

(11) **EP 2 766 432 B1**
(45) Date de publication et mention de la délivrance du brevet: **25.04.2018**
(21) Numéro de dépôt: 12780229.6
(22) Date de dépôt: 08.10.2012
(51) Int. Cl.: C08L 77/06, C08L 23/08, C08L 33/06, B32B 27/34, B32B 27/30, C08K 5/435, F16L 9/12, B32B 1/08, B32B 27/22

(54) **COMPOSITION SOUPLE À BASE DE POLYAMIDE SEMI-AROMATIQUE, SON PROCÉDÉ DE PRÉPARATION ET SES UTILISATIONS**
FLEXIBLE ZUSAMMENSETZUNG AUF BASIS EINES SEMIAROMATISCHEN POLYAMIDS, VERFAHREN ZU IHRER HERSTELLUNG UND VERWENDUNGEN DAVON
SEMI-AROMATIC-POLYAMIDE-BASED FLEXIBLE COMPOSITION, PROCESS FOR PREPARING SAME AND USES THEREOF

(30) Priorité: 13.10.2011 FR 1159261; 17.02.2012 FR 1251460
(43) Date de publication de la demande: 20.08.2014
(73) Titulaire: Arkema France, 92705 Colombes (FR)
(72) Inventeur: BLONDEL, Philippe, F-27300 Bernay (FR); CAREMIAUX, Christophe, F-27110 Cesseville (FR)
(86) Numéro de dépôt international: PCT/FR2012/052276
(87) Numéro de publication internationale: WO 2013/054026

(56) Documents cités:
- EP-A2- 1 505 099
- WO-A2-2011/015790
- US-A1- 2003 008 976
- US-A1- 2011 206 881

## Description

La présente invention a pour objet une composition souple comprenant au moins un polyamide semi-aromatique, au moins une polyoléfine réticulée et au moins un plastifiant, son procédé de préparation, ainsi que ses utilisations, notamment dans la fabrication d'objets divers, comme des biens de consommation courante tels que des équipements électriques, électroniques ou automobiles, du matériel chirurgical, de l'emballage ou encore des articles de sport.

### [L'art antérieur et le problème technique]

Dans l'industrie automobile par exemple, les compositions à base d'un ou plusieurs polyamides semi-aromatiques sont de plus en plus utilisées, en raison des remarquables propriétés thermomécaniques qu'elles confèrent aux pièces réalisées à partir de telles compositions.

Pour adapter au mieux les propriétés thermomécaniques de ces pièces, les compositions à base de polyamide(s) semi-aromatique(s), à partir desquelles ces pièces sont fabriquées, peuvent comprendre un ou plusieurs autres polymères et/ou additifs.

Le document EP 1 505 099 A2 décrit notamment une composition de polyamide comprenant de 60 à 99,5% en poids d'au moins un copolyamide et de 0,5 à 40% en poids d'au moins un produit choisi parmi les plastifiants, les nanocharges, les polyoléfines, les polyoléfines réticulées et des additifs, les teneurs pondérales étant données par rapport au poids total de la composition. Cette composition est décrite comme étant une composition souple à faible reprise en eau, ayant une tenue thermomécanique élevée et étant facile à transformer.

Plus particulièrement, en se reportant aux tableaux de ce document EP 1 505 099 A2, on observe que l'on peut abaisser le module de flexion d'une éprouvette réalisée à partir d'une composition de polyamide semi-aromatique par addition d'un plastifiant et/ou d'une polyoléfine réticulée.

L'addition d'un plastifiant à un polyamide semi-aromatique permet d'abaisser de manière significative le module de flexion. Toutefois, on observe que plus la teneur pondérale en plastifiant augmente dans la composition de polyamide semi-aromatique, plus le module de flexion diminue mais plus les propriétés de résistance au choc à froid (évaluées par la mesure du choc Charpy à -40°C) diminuent. En outre, on constate que, lors de l'extrusion d'une telle composition comprenant un polyamide semi-aromatique et un plastifiant, il se forme d'autant plus de fumées que la teneur en plastifiant est importante.

L'addition d'une polyoléfine réticulée à un polyamide semi-aromatique permet également d'abaisser le module de flexion. Toutefois, pour atteindre des valeurs de module de flexion de l'ordre de 600 à 700 MPa, il faut ajouter au minimum de 40 à 45% en poids du poids total de la composition formée par le polyamide semi-aromatique et la polyoléfine réticulée. Avec de telles proportions pondérales, on obtient une morphologie d'alliage non nodulaire (inversion de phase) qui est rédhibitoire pour une transformation par extrusion d'une telle composition. Il n'est donc pas possible d'obtenir un tube extrudé.

L'addition d'une polyoléfine réticulée et d'un plastifiant à un polyamide semi-aromatique est une autre voie qui permet également d'abaisser de manière très significative le module de flexion. Mais on observe là encore que les propriétés de résistance au choc à froid ne sont pas satisfaisantes. Aussi, pour améliorer ces propriétés mécaniques à froid, on ajoute un polyamide aliphatique qui a pour effet de rigidifier le matériau.

Ainsi, il existe un réel besoin de trouver de nouvelles compositions permettant de réaliser des pièces présentant simultanément :
- une très bonne tenue à haute température, notamment à des températures de service d'au moins 160°C,
- une très bonne résistance au vieillissement qui peut notamment être évaluée par des mesures thermo-oxydatives qui déterminent le temps nécessaire pour diminuer de moitié l'allongement à la rupture d'échantillons,
- de très bonnes propriétés mécaniques, en particulier une résistance au choc à froid se traduisant par une valeur de choc Charpy à -40°C au moins supérieure ou égale à 7 kJ/m, cette valeur étant mesurée selon la norme ISO 179-1eA, et
- un module de flexion inférieur ou égal à 800 MPa, avantageusement inférieur ou égal à 700 MPa et, préférentiellement, inférieur ou égal à 600 MPa, ce module étant mesuré selon la norme ISO 178-93.

En outre, l'ensemble des propriétés qui viennent d'être listées ne doit pas être atteint au détriment d'un procédé de transformation par extrusion, par co-extrusion ou par extrusion-soufflage. En d'autres termes, on cherche à obtenir des pièces extrudées (co-extrudées ou extrudées-soufflées), en particulier des tubes, dont les surfaces intérieure et extérieure présentent un aspect homogène et lisse. En effet, un aspect non régulier de ces surfaces externes des tubes extrudés peut avoir des conséquences dommageables sur les propriétés mécaniques des tubes.

On cherche également à éviter la formation de fumées lors de cette étape de transformation.

### [Brève description de l'invention]

De façon surprenante, la demanderesse a trouvé que ce double besoin, en termes de propriétés et de transformation, est atteint par une composition du type précité, à savoir une composition comprenant au moins un polyamide semi-aromatique, au moins un plastifiant et au moins une polyoléfine réticulée, la polyoléfine réticulée étant obtenue à partir d'au moins un produit (A) comprenant un époxyde insaturé et d'au moins un produit (B) comprenant un anhydride d'acide carboxylique insaturé.

Selon l'invention, la composition comprend les proportions pondérales respectives suivantes des composés qui viennent d'être cités, les pourcentages pondéraux étant donnés par rapport au poids total de la composition :
- de 33 à 40% en poids d'au moins une polyoléfine réticulée telle que définie ci-dessus,
- de 3 à 10% en poids d'au moins un plastifiant, et
- le complément en au moins un polyamide semi-aromatique,
avec des teneurs pondérales en (A) et (B), notées respectivement [A] et [B], telles que le rapport [B] / [A] est compris entre 3 et 14.

Grâce à ce choix particulier de proportions pondérales respectives en polyoléfine(s) réticulée(s), plastifiant(s) et polyamide(s) semi-aromatique(s), d'une part, et de teneurs pondérales en (A) et (B), d'autre part, la composition selon l'invention permet d'obtenir des pièces présentant des propriétés thermomécaniques et de souplesse remarquables. De telles pièces, lorsqu'elles sont obtenues par extrusion, présentent en outre l'avantage d'avoir des surfaces externes lisses. Lors de cette étape de transformation, il se forme peu ou pas de dépôt au niveau de la vis et/ou de la filière d'extrusion, également appelés « larmes de filières », ce qui représente un avantage pour la production des tubes et l'entretien du matériel d'extrusion.

L'invention porte également sur un procédé de préparation de la composition, ainsi que sur ses utilisations, notamment comme couche constitutive d'une structure qui peut être monocouche ou multicouche.

L'invention porte enfin sur une pièce formée en tout ou partie à partir d'une composition selon l'invention ainsi que sur les utilisations d'une telle pièce.

### [Description détaillée de l'invention]

D'autres caractéristiques, aspects, objets et avantages de la présente invention apparaîtront encore plus clairement à la lecture de la description et des exemples qui suivent.

La nomenclature utilisée pour définir les polyamides est décrite dans la norme ISO 1874-1:1992 *"Plastiques* - *Matériaux polyamides (PA) pour moulage et extrusion* - *Partie 1 : Désignation",* notamment en page 3 (tableaux 1 et 2) et est bien connue de l'homme du métier.

Il est par ailleurs précisé que les expressions "*compris entre... et...*" et "*de... à*..." utilisées dans la présente description doivent s'entendre comme incluant chacune des bornes mentionnées.

### Le polyamide semi-aromatique

La composition selon l'invention comprend au moins un polyamide semi-aromatique.

Ce polyamide semi-aromatique comprend au moins un premier motif répétitif semi-aromatique qui est obtenu à partir de la polycondensation d'une diamine et d'un acide dicarboxylique aromatique.

La diamine comprend avantageusement entre 4 et 36 atomes de carbone.

La diamine peut être choisie parmi les diamines aliphatiques, les diamines cycloaliphatiques et les diamines alkylaromatiques. Ces diamines peuvent être linéaires. Elles peuvent également être ramifiées et comporter au moins une ramification alkyle sur la chaîne principale, cette ramification alkyle pouvant être elle-même linéaire ou ramifiée.

Lorsque la diamine est aliphatique et linéaire, elle répond à la formule H₂N-(CH₂)ₓ-NH₂. Elle peut ainsi être choisie parmi la butanediamine (x=4), la pentanediamine (x=5), l'hexanediamine également dénommée hexaméthylène-diamine (x=6), l'heptanediamine (x=7), l'octanediamine (x=8), la nonanediamine (x=9), la décanediamine (x=10), l'undécanediamine (x=11), la dodécanediamine (x=12), la tridécanediamine (x=13), la tetradécanediamine (x=14), l'hexadécane-diamine (x=16), l'octadécanediamine (x=18), l'octadécènediamine (x=18), l'eicosanediamine (x=20), la docosanediamine (x=22) et les diamines obtenues à partir d'acides gras. De telles diamines présentent toutes l'avantage de pouvoir être bioressourcées et comporter du carbone organique issu de la biomasse, qui pourra être déterminé selon la norme ASTM D6866.

Lorsque la diamine est cycloaliphatique, elle peut être choisie parmi la bis(3,5-dialkyl-4-aminocyclohexyl)méthane, la bis(3,5-dialkyl-4-aminocyclohexyl)-éthane, la bis(3,5-dialkyl-4-aminocyclohexyl)propane, la bis(3,5-dialkyl-4-amino-cyclohexyl)butane, la bis-(3-méthyl-4-aminocyclohexyl)-méthane (BMACM ou MACM), la p-bis(aminocyclohexyl)-méthane (PACM) et l'isopropylidènedi(cyclo-hexylamine) (PACP). La diamine cycloaliphatique peut également comporter les squelettes carbonés suivants : norbornyl méthane, cyclohexylméthane, dicyclohexylpropane, di(méthylcyclohexyl), di(méthylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque la diamine est alkylaromatique, elle peut être choisie parmi la 1,3-xylylène diamine et la 1,4-xylylène diamine.

De manière avantageuse, la diamine est une diamine aliphatique.

De manière préférée, la diamine est une diamine aliphatique linéaire.

L'acide dicarboxylique aromatique peut être choisi parmi l'acide téréphtalique (noté T), l'acide isophtalique (noté I), l'acide phtalique et les acides naphtaléniques. Les acides dicarboxylique aromatiques qui viennent d'être cités peuvent également comprendre une ou plusieurs ramifications alkyles, ces ramifications alkyles pouvant être elles-mêmes linéaires ou ramifiées. On peut ainsi citer l'acide 2-méthyl-téréphtalique.

De manière avantageuse, le polyamide semi-aromatique présente une température de fusion supérieure à 230°C, avantageusement comprise entre 230°C et 310°C, et plus particulièrement comprise entre 240°C et 280°C.

De manière plus particulièrement préférée, l'acide dicarboxylique aromatique est l'acide téréphtalique (T).

Selon une version particulière de l'invention, le polyamide semi-aromatique peut comprendre plus de 50% en mol de premier(s) motif(s) répétitif(s), avantageusement plus de 60% en mol.

On peut en particulier envisager l'utilisation d'un polyamide semi-aromatique constitué de 100% en mol d'un ou de plusieurs premiers motifs répétitifs.

En particulier, selon un premier aspect de l'invention, ce polyamide semi-aromatique peut être un homopolymère et n'être constitué que de premiers motifs répétitifs issus de la réaction de polycondensation d'une diamine et d'un acide dicarboxylique aromatique.

Ainsi, le polyamide semi-aromatique peut être choisi parmi les homopolyamides 6.T, 9.T, 10.T, 11.T, 12.T, 14.T, 18.T, 6.I, 9.I, 10.I, 11.I, 12.I, 14.I et 18.I.

Selon un deuxième aspect de l'invention, ce polyamide semi-aromatique peut être un copolymère constitué de premiers motifs répétitifs issus de la réaction de polycondensation d'une diamine et de deux acides dicarboxyliques aromatiques ou de la réaction de polycondensation de deux diamines et d'un acide dicarboxylique aromatique.

Ainsi, dans le premier cas, le polyamide semi-aromatique peut être choisi parmi les copolyamides 6.T/6.I, 9.T/9.I, 10.T/10.I, 11.T/11.I et 12.T/12.I. Dans le deuxième cas, le polyamide semi-aromatique peut être choisi parmi les copolyamides 6.T/9.T, 6.T/10.T, 6.T/11.T, 6.T/12.T, 9.T/10.T, 9.T/11.T, 9.T/12.T, 10.T/11.T, 10.T/12.T et 11.T/12.T. Une liste similaire peut être établie, en remplaçant l'acide téréphtalique (T) par l'acide isophtalique (I).

Selon un troisième aspect de l'invention, ce polyamide semi-aromatique peut être un copolymère comprenant des premiers motifs répétitifs issus de la réaction de polycondensation d'au moins deux diamines et d'au moins deux acides dicarboxyliques aromatiques.

En plus de cet au moins un premier motif répétitif semi-aromatique qui vient d'être détaillé et qui est obtenu à partir de la polycondensation d'une diamine et d'un acide dicarboxylique aromatique, le polyamide semi-aromatique de la composition selon l'invention peut également comprendre au moins un second motif répétitif, ce second motif répétitif étant nécessairement distinct du ou des premiers motifs répétitifs.

Ce second motif répétitif peut être choisi parmi le groupe constitué d'un motif obtenu à partir d'un acide aminocarboxylique, d'un motif obtenu à partir d'un lactame et d'un motif répondant à la formule (diamine en Ca).(diacide en Cb), avec "a" représentant le nombre d'atomes de carbone de la diamine et "b" représentant le nombre d'atomes de carbone du diacide.

Avantageusement, a et b sont chacun compris entre 4 et 36.

Lorsque ce second motif répétitif est obtenu à partir d'un acide aminocarboxylique, cet acide aminocarboxylique peut être choisi parmi l'acide 9-aminononanoïque (9), l'acide 10-aminodécanoïque (10), l'acide 10-aminoundécanoïque (11), l'acide 12-aminododécanoïque (12) et l'acide 11-aminoundécanoïque (11). L'acide aminocarboxylique peut également être ramifié. A titre d'exemple, on peut citer l'acide N-heptyl-11-aminoundécanoïque.

Lorsque ce second motif répétitif est obtenu à partir d'un lactame, ce lactame peut être choisi parmi la pyrrolidinone, la 2-pipéridinone, l'énantholactame, le caprylolactame, le pelargolactame, le décanolactame (10), l'undécanolactame (11) et le lauryllactame (12).

Lorsque ce second motif répétitif est un motif répondant à la formule (diamine en Ca).(diacide en Cb), il est obtenu à partir de la polycondensation d'une diamine, la diamine en Ca, et d'un acide dicarboxylique, le diacide en Cb, étant précisé que cet acide dicarboxylique n'est pas un acide dicarboxylique aromatique.

Cette diamine en Ca peut être choisie parmi les diamines aliphatiques, les diamines cycloaliphatiques et les diamines alkylaromatiques. Ces diamines en Ca peuvent être linéaires. Elles peuvent également être ramifiées et comporter au moins une ramification alkyle sur la chaîne principale, cette ramification alkyle pouvant être elle-même linéaire ou ramifiée.

Les diamines décrites ci-dessus pour l'obtention du premier motif répétitif peuvent également être utilisées comme diamine en Ca pour l'obtention du second motif répétitif. On se reportera donc aux paragraphes ci-dessus relatifs aux diamines susceptibles d'être utilisées pour l'obtention du premier motif répétitif pour des exemples de diamines en Ca susceptibles d'être utilisées pour l'obtention du second motif répétitif.

L'acide dicarboxylique (diacide en Cb) mis en oeuvre pour l'obtention du second motif répétitif peut être choisi parmi les acides dicarboxyliques aliphatiques et les acides dicarboxyliques cycloaliphatiques. Ces acides dicarboxyliques peuvent être linéaires. Ils peuvent également être ramifiés et comporter au moins une ramification alkyle sur la chaîne principale, cette ramification alkyle pouvant être elle-même linéaire ou ramifiée.

Lorsque l'acide dicarboxylique (diacide en Cb) est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tetradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque l'acide dicarboxylique (diacide en Cb) est cycloaliphatique, il peut comporter les squelettes carbonés suivants : norbornyl méthane, cyclohexane, cyclohexylméthane, dicyclohexylméthane, dicyclohexylpropane, di(méthylcyclo-hexyl), di(méthylcyclohexyl)propane.

Ainsi, le second motif répétitif du polyamide semi-aromatique peut notamment désigner les motifs suivants 6, 11, 12, 6.10, 6.12, 6.14, 6.18, 10.10, 10.12, 10.14, 10.18 et 12.12.

Selon un quatrième aspect de l'invention, ce polyamide semi-aromatique peut être un copolymère constitué de premiers motifs répétitifs issus de la réaction de polycondensation d'une diamine et d'un acide dicarboxylique aromatique et de seconds motifs répétitifs issus soit d'un acide aminocarboxylique, soit d'un lactame, soit de la polycondensation d'une diamine en Ca et d'un diacide en Cb tels que décrits ci-dessus.

Parmi les combinaisons envisageables, les copolyamides suivants présentent un intérêt particulièrement marqué : il s'agit des copolyamides répondant à l'une des formules choisies parmi 11/6.T, 12/6.T, 6.10/6.T, 6.12/6.T, 10.10/6.T, 10.12/6.T, 12.12/6.T, 11/9.T, 12/9.T, 6.10/9.T, 6.12/9.T, 10.10/9.T, 10.12/9.T, 12.12/9.T, 11/10.T, 12/10.T, 6.10/10.T, 6.12/10.T, 10.10/10.T, 10.12/10.T et 12.12/10.T.

Selon un cinquième aspect de l'invention, ce polyamide semi-aromatique peut être un copolymère comprenant des premiers motifs répétitifs issus de la réaction de polycondensation d'au moins une diamine et d'au moins un acide dicarboxylique aromatique et des seconds motifs répétitifs issus d'au moins un acide aminocarboxylique, d'au moins un lactame et/ou de la polycondensation d'une diamine en Ca et d'un diacide en Cb tels que décrits ci-dessus.

Parmi les multiples combinaisons envisageables, on peut notamment citer les copolyamides répondant à l'une des formules choisies parmi :
- 6/11/10.T, 6/12/10.T, 11/12/10.T, 11/6.10/10.T, 12/6.10/10.T, 11/10.6/10.T, 12/10.6/10.T, ces copolyamides comprenant tous un premier motif répétitif 10.T et deux seconds motifs répétitifs,
- 6/6.T/10.T, 11/6.T/10.T, 12/6.T/10.T, ces copolyamides comprenant tous deux premiers motifs répétitifs 6.T et 10.T et un second motif répétitif,
- 11/9.T/9.I, 12/9.T/9.I, 11/10.T/10.I, 12/10.T/10.I, ces copolyamides comprenant tous deux premiers motifs répétitifs et un second motif répétitif,
- 6/11/6.T/10.T, 11/12/6.T/10.T, ces copolyamides comprenant tous deux premiers motifs répétitifs 6.T et 10.T et deux seconds motifs répétitifs.

Dans le cadre de la présente invention, on peut avantageusement utiliser des premiers et, le cas échéant, seconds motifs répétitifs qui sont ou seront obtenus, en tout ou partie à partir de diamines, d'acides dicarboxyliques, d'acides amino-carboxyliques et/ou de lactames bioressourcés, c'est-à-dire comportant du carbone organique issu de la biomasse, qui pourra être déterminé selon la norme ASTM D6866.

### La polyoléfine réticulée

La composition selon l'invention comprend au moins une polyoléfine réticulée, ladite polyoléfine réticulée se présentant comme une phase dispersée dans la matrice formée par le(s) polyamide(s) semi-aromatique(s).

Cette polyoléfine réticulée provient de la réaction de deux ou d'au moins deux produits ayant des groupes réactifs entre eux.

Plus particulièrement, la polyoléfine réticulée est obtenue à partir d'au moins un produit (A) comprenant un époxyde insaturé et d'au moins un produit (B) comprenant un anhydride d'acide carboxylique insaturé.

Le produit (A) est avantageusement un polymère comprenant un époxyde insaturé, cet époxyde insaturé étant introduit dans ledit polymère, soit par greffage, soit par copolymérisation.

L'époxyde insaturé peut notamment être choisi parmi les époxydes suivants :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Selon une première forme, le produit (A) est une polyoléfine greffée par un époxyde insaturé. On entend par polyoléfine, un homopolymère ou copolymère comprenant un ou plusieurs motifs oléfines tels que des motifs éthylène, propylène, butène-1 ou toute autre alpha-oléfine. A titre d'exemple de polyoléfine, on peut citer :
- le polyéthylène et, notamment, le polyéthylène basse densité (LDPE), le polyéthylène haute densité (HDPE), le polyéthylène à basse densité linéaire (LLDPE) et le polyéthylène très basse densité (VLDPE) ; le polypropylène ; les copolymères éthylène/propylène ; les polyoléfines élastomères comme l'éthylène-propylène (EPR ou EPM) ou l'éthylène-propylène-diène monomère (EPDM) ; ou encore les polyéthylènes métallocènes obtenus par catalyse monosite ;
- les copolymères blocs styrène/éthylène-butène/styrène (SEBS) ; les copolymères blocs styrène/butadiène/styrène (SBS) ; les copolymères blocs styrène/isoprène/styrène (SIS) ; ou encore les copolymères blocs styrène/éthylène-propylène/styrène ;
- les copolymères de l'éthylène et d'au moins un produit choisi parmi les sels d'acides carboxyliques insaturés, les esters d'acides carboxyliques insaturés et les esters vinyliques d'acides carboxyliques saturés. La polyoléfine peut notamment être un copolymère d'éthylène et de (méth)acrylate d'alkyle ou un copolymère d'éthylène et d'acétate de vinyle.

Selon une deuxième forme, le produit (A) est un copolymère d'alpha-oléfine et d'un époxyde insaturé et, avantageusement, un copolymère de l'éthylène et d'un époxyde insaturé. Avantageusement, la quantité d'époxyde insaturé peut représenter jusqu'à 15% en poids du copolymère (A), la quantité d'éthylène représentant quant à elle au moins 50% en poids du copolymère (A).

On peut plus particulièrement citer les copolymères de l'éthylène, d'un ester vinylique d'acide carboxylique saturé et d'un époxyde insaturé ainsi que les copolymères de l'éthylène, d'un (méth)acrylate d'alkyle et d'un époxyde insaturé. De préférence, l'alkyle du (méth)acrylate comprend de 2 à 10 atomes de carbone. Des exemples d'acrylates ou méthacrylates d'alkyle utilisables sont notamment l'acrylate de méthyle, le méthacrylate de méthyle, l'acrylate d'éthyle, l'acrylate de n-butyle, l'acrylate d'isobutyle et l'acrylate de 2-éthylhexyle.

Selon une version avantageuse de l'invention, le produit (A) est un copolymère d'éthylène, d'acrylate de méthyle et de méthacrylate de glycidyle ou un copolymère d'éthylène, d'acrylate de n-butyle et de méthacrylate de glycidyle. On pourra notamment utiliser le produit commercialisé par la société ARKEMA sous la dénomination LOTADER® AX8900.

Selon une autre forme de l'invention, le produit (A) est un produit ayant deux fonctions époxyde, tel que par exemple le diglycidyl éther du bisphénol A (DGEBA).

Le produit (B) est avantageusement un polymère comprenant un anhydride d'acide carboxylique insaturé, cet anhydride d'acide carboxylique insaturé étant introduit dans ledit polymère, soit par greffage, soit par copolymérisation.

Des exemples d'anhydrides d'acide dicarboxylique insaturé utilisables comme constituants du produit (B) sont notamment l'anhydride maléique, l'anhydride itaconique, l'anhydride citraconique et l'anhydride tétrahydrophtalique.

Selon une première forme, le produit (B) est une polyoléfine greffée par un anhydride d'acide carboxylique insaturé. Comme on l'a vu ci-dessus, une polyoléfine est un homopolymère ou copolymère comprenant un ou plusieurs motifs oléfines tels que des motifs éthylène, propylène, butène-1 ou toute autre alpha-oléfine. Cette polyoléfine peut être notamment choisie parmi les exemples de polyoléfines listés plus haut pour le produit (A), lorsque ce dernier est une polyoléfine greffée par un époxyde insaturé.

Selon une deuxième forme, le produit (B) est un copolymère d'alpha-oléfine et d'un anhydride d'acide carboxylique insaturé et, avantageusement, un copolymère de l'éthylène et d'un anhydride d'acide carboxylique insaturé. Avantageusement, la quantité d'anhydride d'acide carboxylique insaturé peut représenter jusqu'à 15% en poids du copolymère (B), la quantité d'éthylène représentant quant à elle au moins 50% en poids du copolymère (B).

On peut plus particulièrement citer les copolymères de l'éthylène, d'un ester vinylique d'acide carboxylique saturé et d'un anhydride d'acide carboxylique insaturé ainsi que les copolymères de l'éthylène, d'un (méth)acrylate d'alkyle et d'un anhydride d'acide carboxylique insaturé. De préférence, l'alkyle du (méth)acrylate comprend de 2 à 10 atomes de carbone. L'acrylate ou le méthacrylate d'alkyle peut être choisi parmi ceux cités plus haut pour le produit (A).

Selon une version avantageuse de l'invention, le produit (B) est un copolymère de l'éthylène, d'un (méth)acrylate d'alkyle et d'un anhydride carboxylique insaturé. Préférentiellement, le produit (B) est un copolymère d'éthylène, d'acrylate d'éthyle et d'anhydride maléique ou un copolymère d'éthylène, d'acrylate de butyle et d'anhydride maléique. On pourra notamment utiliser les produits commercialisés par la société ARKEMA sous les dénominations LOTADER® 4700 et LOTADER® 3410.

On ne sortirait pas du cadre de l'invention si une partie de l'anhydride maléique du produit (B), selon les première et deuxième formes qui viennent d'être décrites, était en partie hydrolysée.

Selon l'invention, les teneurs pondérales en produit (A) et en produit (B), que l'on note respectivement [A] et [B], sont telles que le rapport [B] / [A] est compris entre 3 et 14 et, avantageusement, entre 4 et 9.

Dans la composition selon l'invention, la polyoléfine réticulée peut également être obtenue à partir des produits (A), (B) tels que décrits ci-dessus et d'au moins un produit (C), ce produit (C) comprenant un acide carboxylique insaturé ou un acide alpha-oméga-aminocarboxylique.

Le produit (C) est avantageusement un polymère comprenant un acide carboxylique insaturé ou un acide alpha-oméga-aminocarboxylique, l'un ou l'autre de ces acides étant introduit dans ledit polymère par copolymérisation.

Des exemples d'acides carboxyliques insaturés utilisables comme constituants du produit (C) sont notamment l'acide acrylique, l'acide méthacrylique, les anhydrides d'acide carboxylique cités plus haut comme constituants du produit (B), ces anhydrides étant totalement hydrolysés.

Des exemples d'acides alpha-oméga-aminocarboxyliques utilisables comme constituants du produit (C) sont notamment l'acide 6-aminohexanoïque, l'acide 11-aminoundécanoïque et l'acide 12-aminododécanoïque.

Le produit (C) peut être un copolymère d'alpha-oléfine et d'un acide carboxylique insaturé et, avantageusement, un copolymère de l'éthylène et d'un acide carboxylique insaturé. On peut notamment citer les copolymères totalement hydrolysés du produit (B).

Selon une version avantageuse de l'invention, le produit (C) est un copolymère de l'éthylène et de l'acide (méth)acrylique ou un copolymère de l'éthylène, d'un (méth)acrylate d'alkyle et de l'acide (méth)acrylique. La quantité d'acide (méth)acrylique peut représenter jusqu'à 10% en poids et, de préférence, de 0,5 à 5% en poids du copolymère (C). La quantité de (méth)acrylate d'alkyle est généralement comprise entre 5 et 40% en poids du copolymère (C).

Préférentiellement, le produit (C) est un copolymère d'éthylène, d'acrylate de butyle et d'acide acrylique. On pourra notamment utiliser le produit commercialisé par la société BASF sous la dénomination LUCALENE® 3110.

Selon l'invention, les teneurs pondérales en produit (A), en produit (B), en produit (C) que l'on note respectivement [A], [B] et [C] sont telles que le rapport [B] / ([A]+[C]) est compris entre 1,5 et 8, les teneurs pondérales en produits (A) et (B) étant telles que [C] ≤ [A].

De manière avantageuse, le rapport [B] / ([A]+[C]) est compris entre 2 et 7.

La phase dispersée de polyoléfine réticulée peut bien entendu provenir de la réaction d'un ou plusieurs produits (A) avec un ou plusieurs produits (B) et, le cas échéant, avec un ou plusieurs produits (C).

On peut utiliser des catalyseurs permettant d'accélérer la réaction entre les fonctions réactives des produits (A) et (B). On peut notamment se reporter à l'enseignement du document WO 2011/015790 pour ce qui concerne des exemples de catalyseurs, ceux-ci pouvant être utilisés dans une teneur pondérale comprise entre 0,1 et 3% et, avantageusement, entre 0,5 et 1% du poids total des produits (A), (B) et, le cas échéant, (C).

### Le plastifiant

La composition selon l'invention comprend au moins un plastifiant.

Ce plastifiant peut être un plastifiant couramment utilisé dans les compositions à base de polyamide(s).

Avantageusement, on utilise un plastifiant qui présente une bonne stabilité thermique afin qu'il ne se forme pas de fumées lors des étapes de mélange des différents polymères et de transformation de la composition obtenue.

En particulier, ce plastifiant peut être choisi parmi :
- les dérivés du benzène sulfonamide tels que le n-butyl benzène sulfonamide (BBSA), les isomères ortho et para de l'éthyl toluène sulfonamide (ETSA), le N-cyclohexyl toluène sulfonamide et le N-(2-hydroxypropyl) benzène sulfonamide (HP-BSA),
- les esters d'acides hydroxybenzoïques tels que le para-hydroxybenzoate d'éthyl-2 hexyle (EHPB) et le para-hydroxybenzoate de décyl-2 hexyle (HDPB),
- les esters ou éthers du tétrahydrofurfuryl alcool comme l'oligoéthylèneoxy-tétrahydrofurfurylalcool, et
- les esters de l'acide citrique ou de l'acide hydroxymalonique, tels que l'oligoéthylèneoxymalonate.

Un plastifiant préféré, car couramment utilisé, est le n-butyl benzène sulfonamide (BBSA).

Un autre plastifiant plus particulièrement préféré est le N-(2-hydroxy-propyl) benzène sulfonamide (HP-BSA). Ce dernier présente en effet l'avantage d'éviter la formation de dépôts au niveau de la vis et/ou de la filière d'extrusion ("larmes de filières"), lors d'une étape de transformation par extrusion.

On peut bien évidemment utiliser un mélange de plastifiants.

La composition selon l'invention comprend, par rapport au poids total de la composition :
- de 33 à 40%, avantageusement de 35 à 37%, en poids d'au moins une polyoléfine réticulée telle que décrite ci-dessus,
- de 3 à 10%, avantageusement de 4 à 8%, en poids d'au moins un plastifiant, et
- le complément en au moins un polyamide semi-aromatique.

Cette composition peut être seulement constituée de ces trois familles de composés, à savoir d'au moins une polyoléfine réticulée, d'au moins un plastifiant et d'au moins un polyamide semi-aromatique.

Toutefois, la composition peut également comprendre d'autres composés en dehors de ceux qui viennent d'être cités. La composition selon l'invention peut notamment comprendre en outre au moins un additif et/ou au moins un polymère supplémentaire.

### Les additifs

La composition selon l'invention peut également comprendre en outre au moins un additif.

Cet additif peut notamment être choisi parmi les adjuvants aidant à la transformation (ou processing aids), les charges, les stabilisants (UV et/ou à la chaleur), les colorants, les agents de démoulage, les agents d'ignifugation, les agents tensio-actifs, les azurants optiques, les anti-oxydants et leurs mélanges.

Parmi les adjuvants aidant à la transformation ou processing aids, on peut citer les stéarates, tels que les stéarates de calcium ou de zinc, les cires naturelles, les polymères comprenant du tétrafluoroéthylène (TFE).

La proportion pondérale en processing aids est classiquement comprise entre 0,01 et 0,3% en poids, avantageusement entre 0,02 et 0,1% en poids, par rapport au poids total de la composition.

Parmi les charges, on peut citer la silice, le graphite, le graphite expansé, le noir de carbone, les fibres de carbone, les billes de verre, le kaolin, la magnésie, les scories, le talc, les nanocharges (nanotubes de carbone), les pigments, oxydes métalliques (oxyde de titane), les métaux, les fibres (aramides, de verre, de carbone).

En fonction de la nature des charges, la quantité de ces dernières peut représenter jusqu'à 50% en poids, avantageusement, jusqu'à 30% en poids, du poids total de la composition.

### Les polymères supplémentaires

Une composition conforme à l'invention peut en outre comprendre un ou plusieurs polymères supplémentaires, et notamment au moins un troisième polymère, un tel polymère étant distinct du(des) polyamide(s) semi-aromatique(s) et de la (ou des) polyoléfine(s) réticulée(s) mentionnés ci-avant.

Avantageusement, ce polymère supplémentaire peut notamment être choisi parmi un polyamide, un polyamide-bloc-éther, un polyétheramide, un polyesteramide, un polysulfure de phénylène (PPS), un polyphénylène oxyde (PPO), une polyoléfine non réticulée (par opposition à la polyoléfine réticulée envisagée ci-avant), un polymère fluoré, et leurs mélanges. S'agissant des polyoléfines non réticulées, on peut citer les polyoléfines décrites dans le chapitre "la polyoléfine réticulée", c'est-à-dire les produits (A), (B) ou (C) qui sont alors utilisés seuls pour ne pas réticuler, étant noté que ces polyoléfines non réticulées sont par ailleurs connues comme modifiants-chocs.

Le polymère supplémentaire peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoates.

De préférence, le polymère supplémentaire est choisi parmi les polyamides aliphatiques et les polyamides-bloc-éthers. Parmi les polyamides aliphatiques, on peut notamment citer les polyamides à longue chaîne tels que les PA11, PA12, PA6.10, PA6.12, PA6.14, PA10.10, PA10.12 et PA12.12.

La composition peut ainsi contenir jusqu'à 20% en poids, par rapport au poids total de la composition, d'au moins un polymère supplémentaire.

L'invention porte également sur un procédé de préparation d'une composition telle que définie ci-dessus. Selon ce procédé, la composition peut être préparée par toute méthode qui rend possible l'obtention d'un mélange homogène telle que l'extrusion à l'état fondu, le compactage ou encore le malaxeur à rouleaux.

Plus particulièrement, la composition selon l'invention peut être préparée par mélange à l'état fondu du(des) polyamide(s) semi-aromatique(s), du(des) plastifiant(s) et des produits (A), (B) et éventuellement (C) permettant d'obtenir la (ou les) polyoléfine(s) réticulée(s).

Les éventuels additifs et/ou polymères supplémentaires peuvent, quant-à-eux, être introduits, soit en même temps que les polyamide(s) semi-aromatique(s), plastifiant(s) et produits (A), (B) et, le cas échéant, (C), soit lors d'une étape ultérieure.

Avantageusement, la composition peut être obtenue sous forme de granulés par compoundage, notamment au moyen d'une extrudeuse bi-vis, d'un co-malaxeur ou d'un mélangeur interne. Ces granulés de la composition selon l'invention obtenue par le procédé de préparation décrit ci-dessus peuvent être ensuite transformés à l'aide d'outils connus de l'homme de l'art (tels qu'une presse à injecter ou une extrudeuse) sous forme de filaments, de tubes, de films et/ou d'objets moulés.

Le procédé de préparation de la composition selon l'invention peut aussi utiliser une extrudeuse bi-vis alimentant, sans granulation intermédiaire, une presse à injecter ou une extrudeuse pour la réalisation de filaments, de tubes, de films et/ou d'objets moulés.

L'invention porte ainsi aussi sur un matériau ou article obtenu à partir d'une composition telle que définie ci-dessus par un procédé de transformation connu tel que l'injection, l'extrusion, l'extrusion-soufflage, la co-extrusion ou la multi-injection.

L'invention porte également sur l'utilisation d'une composition telle que décrite ci-dessus pour constituer une structure.

Cette structure peut être monocouche lorsqu'elle n'est formée que de la composition selon l'invention.

Cette structure peut également être multicouche, lorsqu'elle comprend au moins deux couches et que l'une au moins de ces différentes couches est constituée de la composition selon l'invention. Selon une variante avantageuse, cette structure multicouche peut être renforcée et comprendre au moins une couche constituée par une tresse ou par des fibres.

L'invention porte également sur une pièce formée en tout ou partie à partir de la composition selon l'invention. Cette pièce peut comprendre la structure monocouche ou multicouche qui vient d'être mentionnée. Une telle pièce peut notamment être une pièce injectée et, plus particulièrement, une pièce extrudée, co-extrudée ou extrudée-soufflée. Elle peut notamment se présenter sous la forme d'un tube, d'un tuyau, d'un réservoir, de fibres, d'un film, d'une feuille ou d'une plaque.

L'invention porte enfin sur l'utilisation d'une telle pièce pour stocker ou véhiculer un fluide. Un tel fluide peut notamment être choisi parmi un carburant (tel qu'une essence, alcoolisée ou non, un diesel ou un bio-diesel), un fluide réfrigérant ou frigorigène (comme, par exemple, du CO₂ ou un fluide fluorocarboné tel que le 1,1,1,2-tétrafluoroéthane ou le 2,3,3,3-tétrafluoropropène, respectivement et communément désignés par la dénomination R-134a ou R-1234yf, notamment utilisés dans les circuits de climatisation, les circuits d'air conditionné ou de réfrigération), un liquide de refroidissement (tel qu'une solution à base d'alcool et/ou d'eau qui peut être utilisée dans le circuit de refroidissement des moteurs), un liquide de frein, une huile, un lubrifiant, un fluide hydraulique, un liquide à base de solution d'urée, un produit chimique, de l'eau ou encore un gaz (comme de l'air, des alcanes, de l'hydrogène ou du dioxyde de carbone) ou des émanations de gaz ou vapeurs (provenant par exemple du moteur), ce gaz pouvant être en pression ou en dépression.

La pièce formée en tout ou partie à partir de la composition selon l'invention peut notamment être utilisée pour la réalisation de tout ou partie d'éléments de matériel chirurgical, d'emballage ou d'articles de sport ou de loisirs. Cette pièce peut également être utilisée pour la réalisation de tout ou partie d'éléments de biens d'équipements électriques et électroniques tels que panneaux solaires, solénoïdes encapsulés, cages de roulement, pompes, systèmes multimédias, câbles et fils. En particulier, les câbles et fils peuvent être recouverts par une couche formée de la composition selon l'invention constituant ainsi une gaine de protection thermique.

Cette pièce comprenant la composition selon l'invention peut avantageusement être utilisée pour la réalisation de tout ou partie d'éléments d'équipements industriels pour le stockage, le transport ou le transfert de fluides tels que ceux listés ci-dessus, en particulier de fluides chauds comme de l'air, de l'huile, des lubrifiants, des fluides hydrauliques ou encore du pétrole et ses composés. De tels équipements peuvent être destinés à une utilisation dans le domaine de l'industrie en général (par exemple, pour des lignes pneumatiques ou hydrauliques) ainsi que dans le domaine de l'exploitation des gisements de pétrole et de gaz sous la mer (domaine de l'Off Shore).

Cette pièce comprenant la composition selon l'invention peut très avantageusement être utilisée pour la réalisation de tout ou partie d'éléments d'équipements automobiles ou pour camions. De tels éléments peuvent notamment être des tubes, des connecteurs de tubes, des pompes ou des pièces injectées sous capot moteur.

Plus particulièrement, ces éléments d'équipements automobiles ou pour camions, notamment lorsqu'ils présentent la forme de tubes et/ou de connecteurs, peuvent en particulier être utilisés :
- dans un dispositif de circulation de gaz, en pression ou en dépression, tel qu'un dispositif d'admission d'air ou de ventilation de gaz moteurs ou un dispositif d'assistance au freinage,
- dans un dispositif de circulation d'huile ou de lubrifiant, tel qu'un dispositif de refroidissement d'huile, un dispositif hydraulique ou un dispositif de freinage,
- dans un dispositif de circulation de liquide, aqueux ou non, tel qu'un dispositif de refroidissement du moteur ou un dispositif de réduction catalytique sélective,
- dans un dispositif de circulation de fluide réfrigérant ou frigorigène, tel qu'un circuit de climatisation,
- dans un dispositif de stockage, de transport ou de transfert (ou circulation) de fluides, en particulier de carburants.

De tels éléments peuvent bien évidemment être rendus antistatiques ou conducteurs, par addition préalable de quantités adaptées de charges conductrices (telles que noir de carbone, fibres de carbone, nanotubes de carbone,...) dans la composition selon l'invention.

Cette pièce comprenant la composition selon l'invention peut également être utilisée pour stocker ou véhiculer un fluide tel que décrit précédemment, et habituellement utilisé dans un circuit de climatisation stationnaire.

D'autres buts et avantages de la présente invention apparaîtront à la lecture des exemples suivants donnés à titre indicatif et nullement limitatif.

### [Exemples]

### Formulation des compositions

Les compositions testées ont été préparées à partir des produits suivants :
- 11/10.T :: polyamide semi-aromatique, de ratio molaire 11/10.T égal à 0.7, obtenu par polycondensation d'acide 11-aminocarboxylique, de 1,10-décanediamine et d'acide téréphtalique, a une température de transition vitreuse Tg de 88°C, une température de fusion Tf de 260°C, une viscosité inhérente de 1,22 (mesurée selon la norme ISO 307) et une enthalpie de fusion de 47 J/g
- PA11 :: homopolyamide obtenu par polycondensation de l'acide amino-11-undécanedioïque comportant 100% de carbone bioressourcé, ayant température de fusion de 185°C, une viscosité inhérente de 1.0 à 1.6 dl/g (mesurée selon la norme ISO 307) et une enthalpie de fusion de 60 J/g
- Lotader AX8900 :: copolymère d'éthylène, d'acrylate de méthyle et de méthacrylate de glycidyle (Et/MA/GMA - 68/24/8 en poids), correspond au produit (A)
- Lotader: 4700 : copolymère d'éthylène, d'acrylate d'éthyle et d'anhydride maléique (Et/EA/MAH - 69/30/1 en poids), correspond au produit (B)
- Lucalène 3110 :: copolymère d'éthylène, d'acrylate de butyle et d'acide acrylique (Et/BA/AA - 88/8/4 en poids), correspond au produit (C)
- BBSA :: n-butyl-benzène-sulfonamide (BBSA)
- HP-BSA: N-(2-hydroxypropyl) benzène sulfonamide (HP-BSA) commercialisé par la société Proviron
- Iodine 201 :: additif antioxydant à base de Kl et de CuI
- Naugard 445 :: 4,4'-bis-(alpha,alpha-diméthylbenzyl)diphénylamine qui est un additif antioxydant

Les compositions 1 à 12 ont toutes été préparées sur une extrudeuse bi-vis, selon les formulations détaillées dans le Tableau 1 ci-dessous.

Les compositions 1, 2 et 4 à 12 sont des compositions conformes à l'invention tandis que la composition 3 est une composition en dehors de l'invention.

### Tests conduits

L'indice d'écoulement à l'état fondu, également dénommé indice de fluidité ou Melt Flow Index (MFI), a été mesuré selon la norme ASTM D1238 à 300°C, sous un poids de 5 kg et les valeurs reportées dans le Tableau 1.

Les compositions 1 à 12 ont été extrudées sous forme de tubes de 8 mm de diamètre et de 1 mm d'épaisseur (8*1mm). Les tubes ainsi extrudés ont été soumis aux tests suivants :
- des tubes ont été soumis à des essais de traction selon la norme ISO 527 afin de déterminer les valeurs d'allongement à la rupture ;
- des tubes ont été soumis au test de choc, à -40°C, selon le protocole VW établi par la société Volkswagen selon la norme TL 524 35. On a ainsi relevé, dans le Tableau 1, le pourcentage de casse ;
- des tubes ont été mis à vieillir dans l'air à 170°C, puis soumis à un choc à -40°C selon la norme DIN 74324. On a ainsi relevé la valeur de la demi-vie (en heures) qui correspond au temps au bout duquel 50% des tubes testés se sont cassés (voir Tableau 1).

Les compositions 1 à 12 ont été injectées sous forme de barreaux, conformément à la norme ISO 179. Ces barreaux ainsi obtenus ont ensuite été conditionnés et maintenus deux semaines sous 50% d'humidité. Les barreaux ont été soumis aux tests suivants :
- le module de flexion de ces barreaux a été mesuré selon la norme ISO 178 et les valeurs obtenues ont été reportées dans le Tableau 1.
- des barreaux ont été entaillés puis testés en choc pendulaire Charpy selon la norme ISO 179-1eA. L'énergie absorbée par les barreaux, exprimée en kJ/m², a été mesurée à 23°C et -40°C respectivement, et les valeurs correspondantes ont été reportées dans le Tableau 1 ci-dessous.

**Tableau 1**

| **Compositions** | **1** | **2** | **3** | **4** | **5** | **6** | **7** | **8** | **9** | **10** | **11** | **12** |
|---|---|---|---|---|---|---|---|---|---|---|---|---|
| 11/10.T | 57.8 | 57.8 | 59.8 | 55.8 | 55.8 | 53.8 | 47.8 | 45.8 | 47.8 | 47.8 | 45.8 | 45.8 |
| (B) Lotader4700 | 28 | 26 | 22 | 30 | 30 | 30 | 30 | 30 | 28 | 30 | 28 | 30 |
| (A) Lotader AX8900 | 4 | 5 | 5 | 6 | 6 | 6 | 6 | 6 | 4 | 6 | 4 | 6 |
| (C) Lucalène 3110 | 4 | 5 | 5 | | | | | | 4 | | 4 | |
| BBSA | 5 | 5 | 7 | 7 | | | 5 | 7 | | | | |
| HP-BSA | | | | | 7 | 9 | | | 5 | 5 | 7 | 7 |
| PA11 | | | | | | | 10 | 10 | 10 | 10 | 10 | 10 |
| Naugard 445 | 0.5 | 0.5 | 0.5 | 0.5 | 0.5 | 0.5 | 0.5 | 0.5 | 0.5 | 0.5 | 0.5 | 0.5 |
| Iodine 201 | 0.7 | 0.7 | 0.7 | 0.7 | 0.7 | 0.7 | 0.7 | 0.7 | 0.7 | 0.7 | 0.7 | 0.7 |
| MFI (g/10 min) | 2.8 | 2.3 | 4.1 | 1.55 | 3.52 | 4.39 | <1 | <1 | 4.09 | <1 | 4.6 | 1.17 |

| **Tubes (8x1mm)** | | | | | | | | | | | | |
|---|---|---|---|---|---|---|---|---|---|---|---|---|
| Allongement à la rupture | | | 151 | 132 | 142 | 158 | 150 | 136 | 183 | 133 | 170 | 166 |
| Choc VW à -40°C (% de casse) | | | 20 | 10 | 3 | 13 | 0 | 0 | 3 | 7 | 0 | 0 |
| Vieillissement à 170°C (1/2 vie en h) | | | >850 | >850 | >850 | >850 | >850 | >850 | >850 | >850 | >850 | >850 |

| **Barreaux** | | | | | | | | | | | | |
|---|---|---|---|---|---|---|---|---|---|---|---|---|
| Module de flexion | 780 | 772 | 649 | 599 | 519 | 336 | 552 | 435 | 524 | 554 | 357 | 373 |
| (MPa) | | | | | | | | | | | | |
| Choc Charpy +23°C (kJ/m²) | 70 | 66 | 72 | 78 | 76 | 88 | 81 | 82 | 79 | 82 | 86 | 86 |
| Choc Charpy -40°C (kJ/m²) | 8 | 8 | 6 | 7 | 9 | 7.5 | 12 | 12 | 9 | 10 | 8 | 9.5 |

On a examiné l'aspect des surfaces intérieure et extérieure des tubes extrudés à partir des compositions 1 à 12 et observé que les surfaces de l'ensemble des tubes extrudés sont lisses et brillantes. Par ailleurs, lors de l'étape d'extrusion, on a pu observer qu'aucune fumée ne se formait. L'examen de la filière d'extrusion a par ailleurs montré que très peu de larmes se sont formées lors de l'extrusion des tubes obtenus à partir des compositions 1 à 4, 7 et 8 (qui comprennent du BBSA) et qu'aucune larme de s'est formée lors de l'extrusion des tubes obtenus à partir des compositions 5, 6 et 9 à 12 (qui comprennent du HP-BSA.

Le choix du HP-BSA permet également d'améliorer les propriétés rhéologiques des compositions selon l'invention pour une transformation par extrusion.

On observe par ailleurs que tous les barreaux présentent un module de flexion inférieur à 800 MPa caractérisant une bonne souplesse du matériau.

Plus particulièrement, les compositions 4 à 12 conformes à l'invention permettent d'obtenir des matériaux qui présentent simultanément :
- des valeurs de module de flexion inférieures à 600 MPA, traduisant donc une très grande souplesse de ces matériaux,
- des valeurs de choc Charpy et de choc VW à -40°C qui sont également très élevées, traduisant une très bonne résistance au choc à froid de ces matériaux,
- des valeurs de vieillissement thermo-oxydatif supérieures à 850 heures, traduisant une excellente résistance au vieillissement de ces matériaux.

La composition 3, qui ne comprend que 32% en poids de polyoléfine réticulée, par rapport au poids total de la composition, n'est pas aussi performante que les compositions selon l'invention en termes de résistance au choc à froid (20% de casse dans le test du choc VW et 6 kJ/m² en choc Charpy, à -40°C).

La comparaison des exemples 5 et 6 met en évidence le fait qu'une proportion légèrement plus importante de plastifiant qui, certes permet de diminuer le module de flexion des matériaux correspondants, a un effet non négligeable sur les propriétés de résistance au choc à froid : le pourcentage de casse dans le test du choc VW à -40°C passe ainsi de 3 à 13 et le choc Charpy à -40°C passe de 9 à 7,5 kJ/m².

La présence de PA11 dans les compositions selon l'invention permet encore d'améliorer les propriétés de souplesse et de résistance au choc à froid des matériaux obtenus à partir des dites compositions (voir compositions 4 et 8, d'une part, compositions 5 et 12, d'autre part).

La pièce formée en tout ou partie à partir de la composition selon l'invention peut en particulier être utilisée pour stocker ou véhiculer un fluide, ledit fluide étant un fluide réfrigérant ou frigorigène tel que du CO₂ ou un fluide fluorocarboné comme le 1,1,1,2-tétrafluoroéthane ou le 2,3,3,3-tétrafluoropropène. Plus particulièrement, elle peut être utilisée dans un circuit de climatisation, notamment de climatisation automobile ou pour camion, ou encore de climatisation stationnaire.

## Revendications

1. Composition comprenant, les pourcentages pondéraux étant donnés par rapport au poids total de la composition :
- de 33 à 40%, en poids d'au moins une polyoléfine réticulée, la polyoléfine réticulée étant obtenue à partir :
• d'au moins un produit (A) comprenant un époxyde insaturé et
• d'au moins un produit (B) comprenant un anhydride d'acide carboxylique insaturé,
- de 3 à 10%, en poids d'au moins un plastifiant,
- le complément en au moins un polyamide semi-aromatique,
les teneurs pondérales en (A) et (B), notées respectivement [A] et [B], étant telles que le rapport [B] / [A] est compris entre 3 et 14.

2. Composition selon la revendication 1, **caractérisée en ce qu'**elle comprend de 35 à 37% en poids d'au moins une polyoléfine réticulée.

3. Composition selon l'une des revendications 1 ou 2, **caractérisée en ce que** le rapport [B] / [A] est compris entre 4 et 9.

4. Composition selon l'une des revendications 1 ou 2, **caractérisée en ce qu'**elle comprend de 4 à 8% en poids de plastifiant.

5. Composition selon la revendication 4, **caractérisée en ce que** le rapport [B] / [A] est compris entre 4 et 9.

6. Composition selon l'une des revendications 1 à 5, **caractérisée en ce que** la polyoléfine réticulée est obtenue à partir des produits (A), (B) et d'au moins un produit (C) comprenant un acide carboxylique insaturé ou un acide alpha-oméga-aminocarboxylique, les teneurs pondérales en (A), (B) et (C), notées respectivement [A], [B] et [C], étant telles que [C] ≤ [A] et le rapport [B] / ([A]+[C]) étant compris entre 1,5 et 8.

7. Composition selon la revendication 6, **caractérisée en ce que** le rapport [B] / ([A]+[C]) est compris entre 2 et 7.

8. Composition selon l'une des revendications 1 à 7, **caractérisée** en ce le produit (A) est un copolymère de l'éthylène, d'un ester vinylique d'acide carboxylique saturé et d'un époxyde insaturé ou un copolymère de l'éthylène, d'un (méth)acrylate d'alkyle et d'un époxyde insaturé.

9. Composition selon l'une quelconque des revendications 1 à 8, **caractérisée en ce que** le produit (B) est un copolymère de l'éthylène, d'un ester vinylique d'acide carboxylique saturé et d'un anhydride d'acide carboxylique insaturé ou un copolymère de l'éthylène, d'un (méth)acrylate d'alkyle et d'un anhydride d'acide carboxylique insaturé.

10. Composition selon l'une quelconque des revendications 6 à 9, **caractérisée en ce que** le produit (C) est un copolymère de l'éthylène et de l'acide (méth)acrylique ou un copolymère de l'éthylène, d'un (méth)acrylate d'alkyle et de l'acide (méth)acrylique.

11. Composition selon l'une quelconque des revendications 1 à 10, **caractérisée en ce que** le polyamide semi-aromatique comprend au moins un premier motif répétitif semi-aromatique obtenu à partir de la polycondensation d'une diamine et d'un acide dicarboxylique aromatique.

12. Composition selon la revendication 11, **caractérisée en ce que** le polyamide semi-aromatique comprend au moins un second motif répétitif choisi parmi le groupe constitué d'un motif obtenu à partir d'un acide aminocarboxylique, d'un motif obtenu à partir d'un lactame et d'un motif répondant à la formule (diamine en Ca).(diacide en Cb), avec a représentant le nombre d'atomes de carbone de la diamine et b représentant le nombre d'atomes de carbone du diacide.

13. Composition selon la revendication 12, **caractérisée en ce que** polyamide semi-aromatique comprend plus de 50% en mol de premier(s) motif(s) répétitifs).

14. Composition selon la revendication 12, **caractérisée en ce que** polyamide semi-aromatique comprend plus de 60% en mol de premier(s) motif(s) répétitif(s).

15. Composition selon l'une quelconque des revendications 1 à 14, **caractérisée en ce que** le plastifiant est choisi parmi le n-butyl benzène sulfonamide (BBSA) et le N-(2-hydroxypropyl) benzene sulfonamide (HP-BSA).

16. Composition selon la revendication 15, **caractérisée en ce que** le plastifiant est le N-(2-hydroxypropyl) benzene sulfonamide (HP-BSA).

17. Composition selon l'une quelconque des revendications 1 à 16, **caractérisée en ce qu'**elle comprend au moins un additif choisi parmi les adjuvants aidant à la transformation (processing aids), les charges, les stabilisants, les colorants, les agents de démoulage, les agents d'ignifugation, les agents tensio-actifs, les azurants optiques, les anti-oxydants et leurs mélanges.

18. Composition selon l'une quelconque des revendications 1 à 17, **caractérisé en ce que** la composition comprend au moins un polymère supplémentaire choisi parmi le groupe constitué par un polyamide, un polyamide-bloc-éther, un polyétheramide, un polyesteramide, un polysulfure de phénylène, un polyphénylène oxyde, une polyoléfine non réticulée, un polymère fluoré et leurs mélanges.

19. Procédé de préparation de la composition telle que définie à l'une quelconque des revendications 1 à 18, **caractérisée en ce que** la composition est préparée par mélange à l'état fondu du(des) polyamide(s) semi-aromatique(s), du(des) plastifiant(s), des produits (A), (B) permettant d'obtenir la (ou les) polyoléfine(s) réticulée(s).

20. Procédé de préparation de la composition telle que définie à l'une quelconque des revendications 1 à 18, **caractérisée en ce que** la composition est préparée par mélange à l'état fondu du(des) polyamide(s) semi-aromatique(s), du(des) plastifiant(s), des produits (A), (B) et (C) permettant d'obtenir la (ou les) polyoléfine(s) réticulée(s).

21. Utilisation de la composition telle que définie à l'une quelconque des revendications 1 à 18 pour constituer une structure monocouche ou au moins une couche d'une structure multicouche.

22. Pièce, notamment pièce extrudée, co-extrudée ou extrudée-soufflée, formée en tout ou partie à partir de la composition telle que définie à l'une quelconque des revendications 1 à 18.

23. Utilisation de la pièce selon la revendication 22 pour stocker ou véhiculer un fluide, ledit fluide étant choisi parmi un carburant, un fluide réfrigérant ou frigorigène, un liquide de refroidissement, un liquide de frein, une huile, un lubrifiant, un fluide hydraulique, un liquide à base de solution d'urée, un gaz ou des émanations de gaz, un produit chimique et de l'eau.

24. Utilisation de la pièce selon la revendication 22 pour stocker ou véhiculer un fluide, ledit fluide étant un fluide réfrigérant ou frigorigène tel que du CO₂ ou un fluide fluorocarboné comme le 1,1,1,2-tétrafluoroéthane ou le 2,3,3,3-tétrafluoropropène.

25. Utilisation selon la revendication 24, **caractérisée en ce que** le fluide réfrigérant ou frigorigène est du CO₂ et le fluide fluorocarboné est le 1,1,1,2-tétrafluoroéthane ou le 2,3,3,3-tétrafluoropropène.

26. Utilisation selon la revendication 23 dans un dispositif d'admission d'air ou de ventilation de gaz moteurs, dans un dispositif d'assistance au freinage, dans un dispositif de refroidissement d'huile, dans un dispositif hydraulique, dans un dispositif de freinage, dans un dispositif de refroidissement de moteur, dans un dispositif de réduction catalytique sélective, dans un circuit de climatisation ou dans un dispositif de stockage, de transport ou de transfert de carburants.

27. Utilisation selon la revendication 26 dans un circuit de climatisation stationnaire, automobile, ou pour camion.

## Patentansprüche

1. Zusammensetzung, umfassend, wobei sich die Gewichtsprozentanteile auf das Gesamtgewicht der Zusammensetzung beziehen:
- 33 bis 40 Gew.-% mindestens eines vernetzten Polyolefins, wobei das vernetzte Polyolefin aus :
• mindestens einem Produkt (A), das ein ungesättigtes Epoxid umfasst, und
• mindestens einem Produkt (B), das ein ungesättigtes Carbonsäureanhydrid umfasst, erhalten wird,
- 3 bis 10 Gew.-% mindestens eines Weichmachers,
- wobei der Rest aus mindestens einem teilaromatischen Polyamid besteht,
wobei die Gewichtsmengen von (A) und (B), die als [A] bzw. [B] geschrieben werden, so beschaffen sind, dass das Verhältnis [B]/[A] zwischen 3 und 14 liegt.

2. Zusammensetzung nach Anspruch 1, **dadurch gekennzeichnet, dass** sie 35 bis 37 Gew.-% mindestens eines vernetzten Polyolefins umfasst.

3. Zusammensetzung nach Anspruch 1 oder 2, **dadurch gekennzeichnet, dass** das Verhältnis [B]/[A] zwischen 4 und 9 liegt.

4. Zusammensetzung nach Anspruch 1 oder 2, **dadurch gekennzeichnet, dass** sie 4 bis 8 Gew.-% Weichmacher umfasst.

5. Zusammensetzung nach Anspruch 4, **dadurch gekennzeichnet, dass** das Verhältnis [B]/[A] zwischen 4 und 9 liegt.

6. Zusammensetzung nach einem der Ansprüche 1 bis 5, **dadurch gekennzeichnet, dass** das vernetzte Polyolefin aus den Produkten (A), (B) und mindestens einem Produkt (C), das eine ungesättigte Carbonsäuren oder eine alpha, omega-Aminocarbonsäure umfasst, erhalten wird, wobei die Gewichtsmengen von (A), (B) und (C), die als [A], [B] bzw. [C] geschrieben werden, so beschaffen sind, dass [C] ≤ [A], und das Verhältnis [B]/([A]+[C]) zwischen 1,5 und 8 liegt.

7. Zusammensetzung nach Anspruch 8, **dadurch gekennzeichnet, dass** das Verhältnis [B]/([A]+[C]) zwischen 2 und 7 liegt.

8. Zusammensetzung nach einem der Ansprüche 1 bis 7, **dadurch gekennzeichnet, dass** es sich bei dem Produkt (A) um ein Copolymer von Ethylen, einem gesättigten Carbonsäurevinylester und einem ungesättigten Epoxid oder ein Copolymer von Ethylen, einem Alkyl(meth)acrylat und einem ungesättigten Epoxid handelt.

9. Zusammensetzung nach einem der Ansprüche 1 bis 8, **dadurch gekennzeichnet, dass** es sich bei dem Produkt (B) um ein Copolymer von Ethylen, einem gesättigten Carbonsäurevinylester und einem ungesättigten Carbonsäureanhydrid oder ein Copolymer von Ethylen, einem Alkyl(meth)acrylat und einem ungesättigten Carbonsäureanhydrid handelt.

10. Zusammensetzung nach einem der Ansprüche 6 bis 9, **dadurch gekennzeichnet, dass** es sich bei dem Produkt (C) um ein Copolymer von Ethylen und (Meth)acrylsäure oder ein Copolymer von Ethylen, einem Alkyl(meth)acrylat und (Meth)acrylsäure handelt.

11. Zusammensetzung nach einem der Ansprüche 1 bis 10, **dadurch gekennzeichnet, dass** das teilaromatische Polyamid mindestens eine erste teilaromatische Wiederholungseinheit, die aus der Polykondensation eines Diamins und einer aromatischen Dicarbonsäure erhalten wird, umfasst.

12. Zusammensetzung nach Anspruch 11, **dadurch gekennzeichnet, dass** das teilaromatische Polyamid mindestens eine zweite Wiederholungseinheit umfasst, die aus der Gruppe bestehend aus einer aus einer Aminocarbonsäure erhaltenen Einheit, einer aus einem Lactam erhaltenen Einheit und einer Einheit der Formel (Ca-Diamin) . (Cb-Disäure) ausgewählt ist, wobei a für die Zahl der Kohlenstoffatome in dem Diamin steht und b für die Zahl der Kohlenstoffatome der Disäure steht.

13. Zusammensetzung nach Anspruch 12, **dadurch gekennzeichnet, dass** das teilaromatische Polyamid mehr als 50 Mol-% erste Wiederholungseinheit bzw. erste Wiederholungseinheiten umfasst.

14. Zusammensetzung nach Anspruch 12, **dadurch gekennzeichnet, dass** das teilaromatische Polyamid mehr als 60 Mol-% erste Wiederholungseinheit bzw. erste Wiederholungseinheiten umfasst.

15. Zusammensetzung nach einem der Ansprüche 1 bis 14, **dadurch gekennzeichnet, dass** der Weichmacher aus N-Butylbenzolsulfonamid (BBSA) und N-(2-Hydroxypropyl)benzolsulfonamid (HP-BSA) ausgewählt ist.

16. Zusammensetzung nach Anspruch 15, **dadurch gekennzeichnet, dass** es sich bei dem Weichmacher um N-(2-Hydroxypropyl)benzolsulfonamid (HP-BSA) handelt.

17. Zusammensetzung nach einem der Ansprüche 1 bis 16, **dadurch gekennzeichnet, dass** sie mindestens ein Additiv umfasst, das aus Verarbeitungshilfsmittel, Füllstoffen, Stabilisatoren, Farbmitteln, Formtrennmitteln, Flammschutzmitteln, Tensiden, optischen Aufhellern, Antioxidantien und Mischungen davon ausgewählt ist.

18. Zusammensetzung nach einem der Ansprüche 1 bis 17, **dadurch gekennzeichnet, dass** die Zusammensetzung mindestens ein zusätzliches Polymer umfasst, das aus der Gruppe bestehend aus einem Polyamid, einem Polyamid-block-ether, einem Polyetheramid, einem Polyesteramid, einem Polyphenylensulfid, einem Polyphenylenoxid, einem unvernetzten Polyolefin, einem Fluorpolymer und Mischungen davon ausgewählt ist.

19. Verfahren zur Herstellung der Zusammensetzung gemäß einem der Ansprüche 1 bis 18, **dadurch gekennzeichnet, dass** die Zusammensetzung durch Mischen des teilaromatischen Polyamids bzw. der teilaromatischen Polyamide, des Weichmachers bzw. der Weichmacher und der Produkte (A) und (B) in schmelzflüssigem Zustand zum Erhalt des vernetzten Polyolefins bzw. der vernetzten Polyolefine hergestellt wird.

20. Verfahren zur Herstellung der Zusammensetzung gemäß einem der Ansprüche 1 bis 18, **dadurch gekennzeichnet, dass** die Zusammensetzung durch Mischen des teilaromatischen Polyamids bzw. der teilaromatischen Polyamide, des Weichmachers bzw. der Weichmacher und der Produkte (A), (B) und (C) in schmelzflüssigem Zustand zum Erhalt des vernetzten Polyolefins bzw. der vernetzten Polyolefine hergestellt wird.

21. Verwendung der Zusammensetzung gemäß einem der Ansprüche 1 bis 18 zur Bildung einer Einschichtstruktur oder mindestens einer Schicht einer Mehrschichtstruktur.

22. Teil, insbesondere extrudiertes, coextrudiertes oder extrusionsgeblasenes Teil, das ganz oder teilweise aus der Zusammensetzung gemäß einem der Ansprüche 1 bis 18 gebildet ist.

23. Verwendung des Teils nach Anspruch 22 zur Lagerung oder Beförderung eines Fluids, wobei das Fluid aus einem Kraftstoff, einem Kühl- oder Kältemittelfluid, einer Kühlflüssigkeit, einer Bremsflüssigkeit, einem Öl, einem Schmiermittel, einem Hydraulikfluid, einer Flüssigkeit auf Basis von Harnstofflösung, einem Gas oder Abgasen, einem chemischen Produkt und Wasser ausgewählt ist.

24. Verwendung des Teils nach Anspruch 22 zur Lagerung oder Beförderung eines Fluids, wobei es sich bei dem Fluid um ein Kühl- oder Kältemittelfluid wie CO₂ oder ein Fluorkohlenwasserstofffluid wie 1,1,1,2-Tetrafluorethan oder 2,3,3,3-Tetrafluorpropen handelt.

25. Verwendung nach Anspruch 24, **dadurch gekennzeichnet, dass** es sich bei dem Kühl- oder Kältemittelfluid um CO₂ handelt und es sich bei dem Fluorkohlenwasserstofffluid um 1,1,1,2-Tetrafluorethan oder 2,3,3,3-Tetrafluorpropen handelt.

26. Verwendung nach Anspruch 23 in einer Lufteinlassvorrichtung oder Motorgasventilationsvorrichtung, in einer Bremshilfevorrichtung, in einer Ölkühlvorrichtung, in einer Hydraulikvorrichtung, in einer Bremsvorrichtung, in einer Motorkühlvorrichtung, in einer Vorrichtung zur selektiven katalytischen Reduktion, in einem Klimatisierungskreislauf oder in einer Vorrichtung zur Lagerung, zum Transport oder zum Transfer von Kraftstoffen.

27. Verwendung nach Anspruch 26 in einem stationären Klimatisierungskreislauf, einem Auto-Klimatisierungskreislauf oder einem Lastwagen-Klimatisierungskreislauf.

## Claims

1. Composition comprising - the weight percentages being given relative to the total weight of the composition -:
- from 33 to 40% by weight of at least one crosslinked polyolefin, the crosslinked polyolefin being obtained from:
a t least one product (A) comprising an unsaturated epoxide, and
a t least one product (B) comprising an unsaturated carboxylic anhydride,
- from 3 to 10% by weight of at least one plasticizer,
- the rest being made up of at least one semiaromatic polyamide,
the weight amounts of (A) and (B), written respectively as [A] and [B], being such that the ratio [B]/[A] is between 3 and 14.

2. Composition according to Claim 1, **characterized in that** it comprises from 35 to 37% by weight of at least one crosslinked polyolefin.

3. Composition according to either of Claims 1 and 2, **characterized in that** the ratio [B]/[A] is between 4 and 9.

4. Composition according to either of Claims 1 and 2, **characterized in that** it comprises from 4 to 8% by weight of plasticizer.

5. Composition according to Claim 4, **characterized in that** the ratio [B]/[A] is between 4 and 9.

6. Composition according to Claims 1 to 5, **characterized in that** the crosslinked polyolefin is obtained from the products (A), (B), and from at least one product (C) comprising an unsaturated carboxylic acid or an alpha,omega-aminocarboxylic acid, the weight amounts of (A), (B) and (C), written respectively as [A], [B] and [C], being such that [C] ≤ [A] and the ratio [B]/([A]+[C]) being between 1.5 and 8.

7. Composition according to Claim 6, **characterized in that** the ratio [B]/([A]+[C]) is between 2 and 7.

8. Composition according to one of Claims 1 to 7, **characterized in that** the product (A) is a copolymer of ethylene, a saturated carboxylic acid vinyl ester, and an unsaturated epoxide, or a copolymer of ethylene, an alkyl (meth)acrylate, and an unsaturated epoxide.

9. Composition according to any one of Claims 1 to 8, **characterized in that** the product (B) is a copolymer of ethylene, a saturated carboxylic acid vinyl ester, and an unsaturated carboxylic anhydride, or a copolymer of ethylene, an alkyl (meth)acrylate, and an unsaturated carboxylic anhydride.

10. Composition according to any one of Claims 6 to 9, **characterized in that** the product (C) is a copolymer of ethylene and (meth)acrylic acid, or a copolymer of ethylene, an alkyl (meth)acrylate, and (meth)acrylic acid.

11. Composition according to any one of Claims 1 to 10, **characterized in that** the semiaromatic polyamide comprises at least one first semiaromatic repeating unit obtained from the polycondensation of a diamine and an aromatic dicarboxylic acid.

12. Composition according to Claim 11, **characterized in that** the semiaromatic polyamide comprises at least one second repeating unit selected from the group consisting of a unit obtained from an aminocarboxylic acid, a unit obtained from a lactam, and a unit conforming to the formula (Ca diamine).(Cb difunctional acid), where a represents the number of carbon atoms in the diamine and b represents the number of carbon atoms in the difunctional acid.

13. Composition according to Claim 12, **characterized in that** the semiaromatic polyamide comprises more than 50 mol% of first repeating unit(s).

14. Composition according to Claim 12, **characterized in that** the semiaromatic polyamide comprises more than 60 mol% of first repeating unit(s).

15. Composition according to any one of Claims 1 to 14, **characterized in that** the plasticizer is selected from n-butylbenzenesulfonamide (BBSA) and N-(2-hydroxypropyl)benzenesulfonamide (HP-BSA).

16. Composition according to Claim 15, **characterized in that** the plasticizer is N-(2-hydroxypropyl)benzenesulfonamide (HP-BSA).

17. Composition according to any one of Claims 1 to 16, **characterized in that** it comprises at least one additive selected from processing aids, fillers, stabilizers, dyes, mold release agents, flame retardants, surfactants, optical brighteners, antioxidants, and mixtures thereof.

18. Composition according to any one of Claims 1 to 17, **characterized in that** the composition comprises at least one additional polymer selected from the group consisting of a polyamide, a polyamide-block-ether, a polyetheramide, a polyesteramide, a polyphenylene sulfide, a polyphenylene oxide, a noncrosslinked polyolefin, a fluoropolymer, and mixtures thereof.

19. Process for preparing the composition as defined in any one of Claims 1 to 18, **characterized in that** the composition is prepared by melt-state mixing the semiaromatic polyamide(s), the plasticizer(s), the products (A), (B) for obtaining the crosslinked polyolefin(s).

20. Process for preparing the composition as defined in any one of Claims 1 to 18, **characterized in that** the composition is prepared by melt-state mixing the semiaromatic polyamide(s), the plasticizer(s), the products (A), (B) and (C) for obtaining the crosslinked polyolefin(s).

21. Use of the composition as defined in any one of Claims 1 to 18 for making a single-layer structure or at least one layer of a multilayer structure.

22. Component, more particularly an extruded, coextruded or extrusion-blow molded component, formed entirely or partly from the composition as defined in any one of Claims 1 to 18.

23. Use of the component according to Claim 22 for storing or conveying a fluid, said fluid being selected from a fuel, a refrigerant or refrigerating fluid, a cooling liquid, a brake fluid, an oil, a lubricant, a hydraulic fluid, a liquid based on urea solution, a gas or gaseous emanations, a chemical product, and water.

24. Use of the component according to Claim 22 for storing or conveying a fluid, said fluid being a refrigerant or refrigerating fluid such as CO₂ or a fluorocarbon fluid such as 1,1,1,2-tetrafluoroethane or 2, 3, 3, 3-tetrafluoropropene.

25. Use according to Claim 24, **characterized in that** the refrigerant or refrigerating fluid is CO₂ and the fluorocarbon fluid is 1,1,1,2-tetrafluoroethane or 2, 3, 3, 3-tetrafluoropropene.

26. Use according to Claim 23 in an air intake device or engine gas ventilation device, in a braking assistance device, in an oil cooling device, in a hydraulic device, in a braking device, in an engine cooling device, in a selective catalytic reduction device, in an air conditioning circuit, or in a device for storage, transport, or transfer of fuels.

27. Use according to Claim 26 in a stationary, automobile, or truck air conditioning circuit.
